# EUROPÄISCHE PATENTSCHRIFT

(11) **EP 2 192 018 B1**
(45) Veröffentlichungstag und Bekanntmachung des Hinweises auf die Patenterteilung: **11.10.2017**
(21) Anmeldenummer: 09010744.2
(22) Anmeldetag: 20.08.2009
(51) Int. Cl.: B61H 7/08, B60T 17/22

(54) **Vorrichtung und Verfahren zur Überwachung einer Magnetbremse an Schienenfahrzeugen**
Device and method for monitoring a magnetic brake on rail vehicles
Dispositif et procédé de surveillance d'un frein magnétique sur des véhicules sur rails

(30) Priorität: 01.12.2008 DE 102008059882
(43) Veröffentlichungstag der Anmeldung: 02.06.2010
(73) Patentinhaber: Schaltbau GmbH, 81829 München (DE)
(72) Erfinder: Edlinger, Helmut, 81476 München (DE)
(74) Vertreter: Grünecker Patent- und Rechtsanwälte PartG mbB

(56) Entgegenhaltungen:
- DE-U1-202007 009 724

## Beschreibung

Die vorliegende Erfindung betrifft eine Vorrichtung zur Überwachung einer Magnetbremse an Schienenfahrzeugen, wobei die Magnetbremse mit einer Spannungsquelle zur Bestromung verbunden ist und die Vorrichtung die Einschaltung und Überwachung des Bremsmagnetstromes umfasst, sowie ein Verfahren zur Überwachung einer Magnetbremse.

Eine Magnetschienenbremse ist eine Bremse für Schienenfahrzeuge. Sie besteht in der Regel aus eisernen Schleifschuhen mit eingebauten Elektromagneten. In der Regel wird der Magnet durch Druckluft abgesenkt, das Berühren der Schiene erfolgt jedoch erst, wenn der Strom eingeschalten wurde. Bei Stromdurchfluss durch den Elektromagneten wird der Bremsschuh auf die Schiene herabgelassen und an diese gezogen und presst sich durch die Magnetkraft an, das heißt die Bremskraft erfolgt durch die Reibung.

Die Reibung sorgt für die Bremswirkung, die auch durch schlüpfrige Schienen nicht spürbar beeinträchtigt wird. Die Bremskraft selber hängt von der Haltekraft, dem Reibwert der Schienen-Bremsmagnetpolschuhe, sowie dem Luftspalt bzw. Verunreinigungen auf dem Schienenkopf und dem Bremsmagneten ab. Aufgrund der durch die Reibung erzielten Bremswirkung unterliegt die Magnetbremse einem hohen Verschleiß und verursacht hohe Wartungs- und Instandhaltungskosten, so dass sie in der Regel nur als Schnell-, Not- und Zwangsbremse eingesetzt wird, die in Gefahrensituationen aktiviert wird.

Um gegenüber dem Flugverkehr konkurrenzfähig zu bleiben, wird eine kontinuierliche Erhöhung der Reisegeschwindigkeit für den Personenverkehr auf Schienen angestrebt. Die höheren Geschwindigkeiten entsprechender Schienenfahrzeuge stellen jedoch auch erhöhte Anforderungen an das Bremskonzept. Hierbei steigt mit einer höheren Bremsausgangsgeschwindigkeit einerseits die benötigte Bremsleistung an, andererseits nimmt der Haftbeiwert zwischen Rad und Schiene ab. Magnetschienenbremsen sind in diesem Zusammenhang vorteilhaft, da sie nicht nur haftbeiwertunabhängig sind, sondern auch eine sehr hohe nutzbare Bremsleistung zur Verfügung stellen, insbesondere auch im Winter, wenn die haftbeiwertabhängigen Bremssysteme durch Laub oder Eis nicht mit ausreichender Sicherheit bereitgestellt werden können.

Magnetbremsen sind heute in der Regel auf den Einsatz als Schnell- und Notbremsen beschränkt. Die zunehmenden Anforderungen an das Bremskonzept machen jedoch die Eingliederung der Magnetbremse als Bestandteil des Bremsleistungskonzeptes notwendig.

Um diese Eingliederung zu gewährleisten, müssen jedoch besondere Sicherheits- und Zuverlässigkeitsanforderungen von der Magnetbremse erfüllt werden. Von entscheidender Bedeutung ist hierbei die Diagnose der Magnetbremse, die der Feststellung der Wirkbereitschaft dient. Entsprechende Prüfeinrichtungen müssen die Führerbremsventillage und die Geschwindigkeit simulieren, wonach das Absenken der Magnete und die Bestromung erkennbar sein muss. In der Regel erfolgt die Kontrolle der Absenkung durch optische Erkennung und muss daher für jeden Wagen einzeln durchgeführt werden.

Aus der DE 20 2007 009 724 U1 ist ein Halbleiterschaltglied zum Betrieb von Magnetschienenbremsen bekannt. Hierbei kann die Stärke des elektrischen Stroms in der Schienenbremse durch Verwendung eines oder mehrerer Leistungshalbleiter, hauptsächlich MOS-FET, und eines Steuermoduls, welches ein geeignetes Modulationssignal zur Ansteuerung der Halbleiter erzeugt, eingestellt werden. Zusätzlich kann vorgesehen sein, dass die Änderung des Betriebsstromes beim Absenken und Angreifen der Schienenbremse als Positionsmeldung ausgewertet wird. Hierbei werden jedoch keine konkreten Vorrichtungen oder Auswerteansätze angegeben, um hier die Positionsmeldung zu erhalten.

Aufgabe der vorliegenden Erfindung ist es, eine Vorrichtung und ein Verfahren zur Überwachung einer Magnetbremse zur Verfügung zu stellen, welche die Funktionsfähigkeit der Magnetbremse überwacht und sicherstellen kann, so dass die Magnetbremse im vollen Umfang auf das Bremsgewicht angerechnet werden kann, und die Gesamtanzahl der Bremsen reduziert werden kann.

Diese Aufgabe wird für eine Vorrichtung zur Überwachung einer Magnetbremse an Schienenfahrzeugen, wobei die Magnetbremse mit einer Spannungsquelle zur Bestromung verbunden ist, die Vorrichtung die Einschaltung und Überwachung des Bremsmagnetstromes umfasst und die Überwachungseinrichtung eine Ermittlungseinrichtung und eine Auswertungseinrichtung umfasst, wobei die Ermittlungseinrichtung die Funktion des Stromkreises zur Bestromung der Magnetbremse kontinuierlich überwacht und den Strom- und/oder Spannungsverlauf aufzeichnet, dadurch gelöst, dass die Auswertungseinrichtung anhand des aufgezeichneten Strom- und/oder Spannungsverlaufs das Aufsetzen der Magnetbremse auf der Schiene durch Detektion zweier Nulldurchgänge der ersten Ableitung des Strom- und/oder Spannungsverlaufs ermittelt.

Durch die erfindungsgemäße Vorrichtung erfolgt somit einerseits eine Diagnose der Bereitschaft des Magnetbremssystems und gleichzeitig wird die Bremsfunktion überwacht, insbesondere wird das Aufsetzen der Bremsmagnete auf den Schienen erkannt. Auf diese Weise kann die Funktion der Magnetbremse sichergestellt werden, so dass diese der Bremsleistung des Fahrzeuges vollständig angerechnet werden kann.

Hierbei ist die Detektion der Nulldurchgänge der ersten Ableitung ein zuverlässiges Verfahren, die erfolgte Bremsung sicherzustellen, unabhängig von äußeren Einflüssen z.B. einer Veränderung der Auflagefläche des Bremsmagneten, durch welche eine Veränderung des Magnetfeldes hervorgerufen wird. Die erfindungsgemäße Vorrichtung ermöglicht somit erstmalig ein Überwachungsverfahren, welches so zuverlässig ist, dass die Bremsleistung der Magnetbremsen vollständig auf das Bremsgewicht angerechnet werden kann.

Da die erfindungsgemäße Vorrichtung einerseits den Stromfluss durch den Magneten und andererseits den Kontakt vom Magneten zu der Schiene feststellt, kann auf die Bremswirkung der Magnetbremse geschlossen werden. Gleichzeitig ermöglicht die erfindungsgemäße Vorrichtung eine zuverlässige und schnelle Ermittlung von Fehlern in den Systemen.

Die erfindungsgemäße Vorrichtung kann hierbei für einen einzelnen Magneten, ein Drehgestell, d.h. zwei Magnete, wie auch für einen Wagen, d.h. zwei Drehgestelle, eingesetzt werden und ermöglicht somit einen breiten, kundenspezifisch anpassbaren, Einsatzbereich.

Gemäß einer bevorzugten Ausführungsform der Erfindung kann ein elektromechanisches Trennelement als Notabschalter im Stromkreis angeordnet werden. Hierdurch ist eine schnelle Abschaltung der Bremse bei Ausgabe von Fehlermeldungen möglich.

Gemäß einer anderen bevorzugten Ausführungsform kann die Ermittlungseinrichtung zusätzlich die einzelnen Elemente des Stromkreises, insbesondere das elektromechanische Trennelement, die Stromsensoren, Löschdioden und Schaltelemente, überwachen, so dass die Überwachungseinrichtung auf jeden Ausfall gesondert reagieren kann und eine sehr kurze Reaktionszeit auf geräteinterne Fehler erzielt wird.

Vorteilhafterweise können die Schaltelemente IGBT-Module sein. Entsprechende Module haben sich in der Praxis bewährt. Die Anzahl der IGBT-Module kann je nach Bedarf gewählt werden. So kann je ein IGBT-Modul, wie auch ein anderes Schaltelement, für einen Magneten, ein Drehgestell oder einen Wagen eingesetzt werden.

Gemäß einer weiteren bevorzugten Ausführungsform kann jeder Bremsmagnet einen Lagesensor aufweisen, so dass zusätzlich zu der Überwachung durch Detektieren der Nulldurchgänge die Entfernung zwischen Bremsmagnet und Schienenkopf festgestellt werden kann. Vorteilhafterweise kann hierbei der Lagesensor ein induktiver, kapazitiver oder optischer Sensor sein.

Gemäß einer anderen Ausführungsform kann vorgesehen sein, dass jeder Bremsmagnet ein Thermometer aufweist. Der Einsatz von zusätzlichen Magneten stellt eine weitere zusätzliche Überwachungsmethode bereit, die den Kontakt des Magneten mit der Schiene wiedergibt.

Ferner kann vor und hinter jedem Bremsmagneten einen Thermosensor angeordnet sein, um so das Aufsetzten des Magneten durch die Veränderung der Temperatur vor und hinter dem Magneten festzustellen. Hierbei ist der Sensor nicht auf dem Träger des Magneten angeordnet, so dass die Lebensdauer und Wartung des Sensors verbessert werden kann.

Nach einer anderen bevorzugten Ausführungsform kann jeder Bremsmagnet in einem eigenen Stromkreis angeordnet sein, um möglichst genaue Ergebnisse für jeden einzelnen Magneten zu erzielen. Bei dem Auftreten einer Fehlermeldung kann auf diese Weise der Fehler schneller zugeordnet und behoben werden.

In Bezug auf das Verfahren wird die Erfindung durch Verfahren zur Überwachung einer Magnetbremse an Schienenfahrzeugen, umfassend die kontinuierliche Überwachung der Funktion des Stromkreises zur Bestromung der Magnetbremse und Aufzeichnung des Strom- und/oder Spannungsverlaufs, dadurch gelöst, dass anhand des aufgezeichneten Strom- und/oder Spannungsverlaufs das Aufsetzen der Magnetbremse auf der Schiene durch die Detektion zweier Nulldurchgänge der ersten Ableitung des Strom- und/oder Spannungsverlaufs ermittelt wird.

Das erfindungsgemäße Verfahren stellt eine zuverlässige Überwachung der Magnetbremsen zur Verfügung, die von äußeren Einflüssen unabhängig ist und schnell auf ermittelte Fehler in dem Stromkreis reagieren kann.

Vorteilhafterweise kann der Stromfluss in Zeitkonstantenabschnitten von 1 bis 30 Millisekunden gemessen wird. Entsprechende Zeitabschnitte haben sich in der Praxis als besonders geeignet erwiesen.

Gemäß einer bevorzugten Ausführungsform kann der Strompfad jedes Bremsmagneten getrennt überwacht werden, um so über jeden Bremsmagneten eine Aussage treffen zu können.

Ferner kann der Strom in der Hinleitung und Rückleitung gemessen werden, auf diese Weise erhöht sich die Genauigkeit der Messung, insbesondere kann, da jeder Magnet einzeln überprüft wird, der kritische Fall einer einseitigen Bremswirkung, z.B. durch Leitungsbruch in einem Magnetkreis, verhindert werden.

Vorteilhafterweise kann die Versorgungsspannung und die systeminternen Spannungen im Magnetkreis zyklisch gemessen werden. Hierdurch wird eine sehr kurze Fehlerdetektionszeit ermöglicht.

Gemäß einer weiteren bevorzugten Ausführungsform können in vorbestimmten Abständen Bremsproben durchgeführt werden. Hierdurch kann einerseits die Funktion der Bremse wie auch der Bremsüberwachung überprüft werden. Gleichzeitig wird durch die Bremsprobe eine Stromkurve erhalten, die mit den Stromkurven normaler Bremsungen verglichen werden kann.

Vorteilhafterweise kann zusätzlich die einzelnen Elemente des Stromkreises überwacht werden und eine Diagnose jedes einzelnen Elementes erfolgen und so möglichst kurze Fehlerdetektionszeiten zu erzielen.

Eine bevorzugte Ausführungsform der Erfindung wird nachfolgend unter Bezugnahme auf die beigefügte Zeichnung erläutert. Es zeigt:
Fig. 1 eine Schaltung einer erfindungsgemäßen Vorrichtung,
Fig. 2 eine schematische Darstellung der Kurve des Stromflusses während der Bestromung der Magnetbremse und Aufsetzten derselben auf die Gleise.
Fig. 3 die schematische Darstellung der Ableitung der Stormkurve aus Fig. 2.

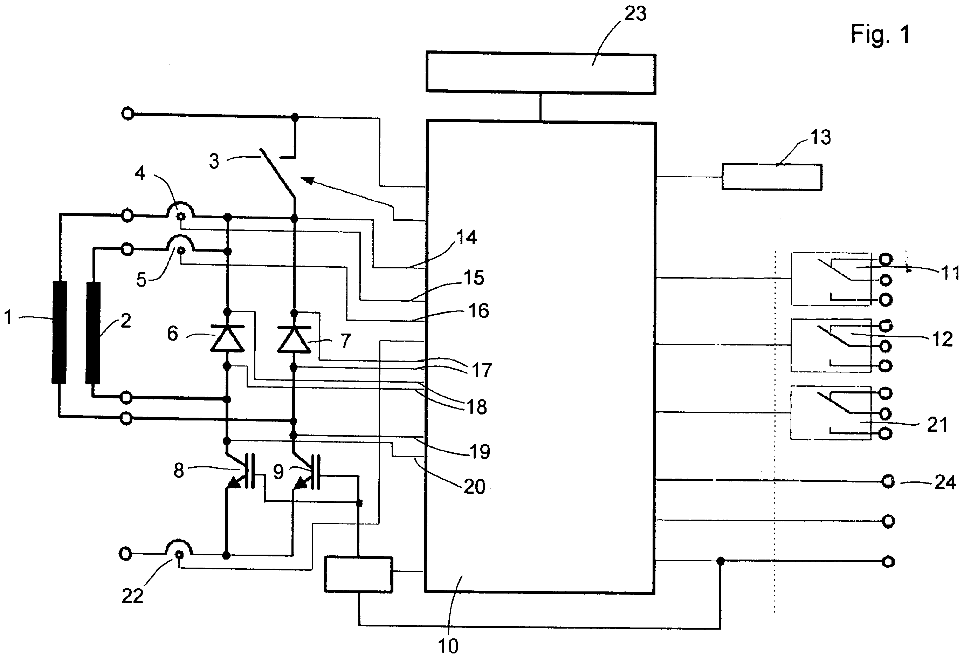

Fig. 1 zeigt die erfindungsgemäße Magnetbremsüberwachung. Hierbei gliedert sich die Überwachung in zwei galvanisch getrennte Teile, den Hochstromteil und den Überwachungsteil. Beide Schaltungsteile können als getrennte Leiterplatten ausgeführt werden. Die Verbindung zwischen diesen erfolgt über eine Steckverbindung.

Der Hochstromteil verbindet die Fahrzeugbatterie mit den Bremsmagneten 1, 2. Beide Bremsmagnete sind direkt an den Pluspol der Batteriespannung geschaltet. Im Strompfad ist ein elektromechanisches Trennelement 3, z.B. ein Schütz zwischen der Fahrzeugbatterie und dem Bremsmagneten angeordnet, zur Abtrennung des positiven Batteriepotenzials vom Gerät und damit auch des Magneten im Fehlerfall. Die Ansteuerung dieses Trennelementes 3 erfolgt über die Auswerteschaltung. Die Ansteuerung des Trennelements 3 kann gleichermaßen über eine übergeordnete Steuereinheit erfolgen.

An das Trennelement 3 schließen sich die Strompfade für die beiden Bremsmagnete 1, 2 an, welche getrennt geführt werden, jedoch jeweils identisch zueinander aufgebaut sind. Jeder dieser Pfade beinhaltet einen Stromsensor 4, 5, z.B. Stromwandler oder Shunt, und führt danach zum Pluspol des Magneten.

Das vom Minuspol des Magneten geführte Kabel wird an einem weiteren Anschlusspunkt der Magnetüberwachung verbunden.

Zwischen den beiden Anschlusspunkten, Plus und Minus der Magnete, befindet sich eine Löschdiode 6, 7 im Gerät als Freilaufkreis. Diese übernimmt im Abschaltzeitpunkt den Stromfluss durch den Magneten.

Der Minuspol des Magneten ist über ein Schaltelement 8, 9 mit dem Minuspol der Fahrzeugbatterie verbunden. Dieses Schaltelement 8, 9 wird zur betriebsmäßigen Einschaltung der Bremsmagnete 1, 2 verwendet. Es ist zweckmäßigerweise ein Halbleiterelement, z.B. ein IGBT. Die Schaltelemente 8, 9 beider Magnetkreise werden zeitgleich geschaltet, sowohl bei der Aktivierung wie auch bei der Deaktivierung.

Die einzelnen Elemente jedes Pfades der Magneten 1, 2, d.h. Stromsensor 4, 5, Löschdiode 6, 7, IGBTs 8, 9 etc., werden getrennt voneinander überwacht. Gemäß einer anderen Ausführungsform der Erfindung kann die Überwachung beider Magnete eines Paares auch über eine gemeinsame Auswertung durchgeführt werden. Hierdurch kann der Verdrahtungsaufwand sowie die Anzahl der notwendigen Elemente kleiner gehalten werden, da nur ein Kabel für Plus- und Minuspol der Magnete zum Drehgestell geführt werden muss.

Ferner könnten die Stromsensoren 4, 5 auch nach dem Minuspol der Bremsmagnete angeordnet werden, vorzugsweise zwischen diesem Anschluss und der im IGBT-Modul 8, 9 integrierten Freilaufdiode.

Die Strommessung erfolgt für jeden Magneten in der Hinleitung.

Zusätzlich kann auch eine Strommessung für beide Magneten zusammen in der Rückleitung erfolgen. Zu diesem Zweck ist ein zusätzlicher Stromsensor 22 hinter den IGBTs 8, 9 vorgesehen. In der Leitung des Stromsensors 22 erfolgt eine redundante Messung des Gesamtstromes, wodurch die Funktion aller Strommesser überwacht werden kann.

Obwohl in der dargestellten Ausführungsform nur ein Stromsensor in der Rückleitung vorgesehen ist, können auch zwei eingesetzt werden, d.h. für jeden Magneten einen, so das eine bessere Fehlerzuordnung möglich ist. Der zusätzliche Stromsensor 22 erhöht die Genauigkeit des Gesamtsystems, da Fehler genauer zugeordnet werden können.

Mit dem Bezugszeichen 10 wird die Überwachungseinheit gekennzeichnet. Diese Überwachungseinheit dient zur Auswertung der Systemzustände in der Magnetbremsüberwachung. Die Versorgung der Auswerteschaltung erfolgt über die Batterie des Fahrzeugs. Die Batteriespannung ist über eine Sicherung im Gerät abgesichert. Ein Netzteil 23 erzeugt aus dieser Batterie-Versorgungsspannung die in der Schaltung benötigten Sekundärspannungen für die Elektronik.

Der Einschaltbefehl wird über auch untereinander galvanisch getrennte Eingänge der Schaltung zur Verfügung gestellt. Es gibt hierbei jeweils getrennte Eingänge für die Bremsung und die Bremsprobe. Die Ansteuerung der Bremse erfolgt direkt über die Hardware. Die Übergabe der Einschaltinformation an dem Prozessor dient nur der Information des Prozessors über den Zustand des Systems.

Als Signalausgang dienen galvanisch getrennte Kontakte zur Anzeige des Systemzustandes. Als trennende Elemente können z. B. Relais 11, 12, 21 benutzt werden. Die in Fig. 1 dargestellte Lösung besitzt drei Ausgänge. Ein Signal ist für die Bewertung der aktuellen Bremsanforderung vorgesehen. Das andere Signal dient zur Speicherung von Fehlermeldungen über die Bremsanforderung hinaus. Das dritte Signal dient zur Bewertung der Bremsprobe. Diese Aufteilung erhöht die Genauigkeit des gesamten Systems. Ein Diagnoseanschluss 24 dient zum Auslesen von detaillierten Systeminformationen über ein externes Gerät, z.B. einen Computer, welcher mit der erfindungsgemäßen Vorrichtung über eine serielle Schnittstelle verbunden ist.

Der Prozessorkem des Systems bedient die oben beschriebenen Ein- und Ausgänge, wie auch den Diagnoseanschluss. Die internen Zustände des Systems werden dem Prozessor über spezielle Messglieder der Elektronik im Hochstromteil mitgeteilt. Dem Prozessor ist ein eigener als IC ausgeführter Überwachungsbaustein 13 zugeordnet, der neben dem Prozessor auch die sekundären Spannungen im System überwacht.

Durch die Messpunkte im Stromkreis der Magnete erhält der Prozessor Informationen zum Systemzustand. Mit diesen Informationen bildet der Prozessor die entsprechenden Fehlersignale und Einträge in den Fehlerspeicher zur Ausgabe über die Diagnoseschnittstelle.

Das Auswerteverfahren gliedert sich in zwei Untereinheiten, nämlich die Diagnose des Magnetbremsüberwachungssystems und die Überwachung der Bremsfunktion. Hierbei überwacht die Systemdiagnose unter anderem die einzelnen Bauelemente des Hochstromteils. Dies kann z.B. durch Spannungsmessungen durchgeführt werden. Im Allgemeinen erfolgen in diesem Zusammenhang folgende Messungen/Überwachungen:

### 1. Überwachung der Versorgungsspannung des Magneten

Hierbei wird ein geringer Strom zwischen den Anschlüssen der Batterie erzeugt und in dem Überwachungselement 10 bewertet. Bei Ausfall mindestens eines Anschlusses, z.B. Ausfall der Sicherung oder Kabelbruch, ist kein Stromfluss möglich und wird umgehend festgestellt.

### 2. Überwachung des elektromechanischen Trennelementes 3

Die Spannung hinter dem Trennelement 3 wird durch die Detektiereinheit 14 gemessen. Wenn Spannung am Gerät anliegt, d.h. die unter 1. beschriebene Messung zu dem Ergebnis gekommen ist, dass ein Strom zwischen den Anschlüssen erzeugt wird, und in der Detektiereinheit 14 keine Spannung gemessen wird, ist das Trennelement 3 offen. Auf diese Weise kann eine fehlerhafte Stellung des Trennelementes 3 zeitnah festgestellt werden.

### 3. Überwachung des Stromflusses durch die Magnete

Über Stromwandler 4, 5 oder Shunts wird der Stromfluss durch die einzelnen Bremsmagnete 1, 2 gemessen. Die Messung erfolgt je nach Magnetkreis an den Detektiereinheiten 15, 16. Das durch den Sensor gelieferte Signal wird einer Tiefpassfilterung unterzogen. Damit werden die auf dem Batterienetz vorhandenen Störungen ausgefiltert. Über die Messung des Stromes können hierbei folgende Systemzustände erkannt werden:
- wird kein Stromfluss gemessen, liegt ein Leitungsbruch im Anschluss eines Bremsmagneten vor,
- wird ein Stromfluss ohne Einschaltung der Bremse gemessen, liegt ein Kurzschluss im Anschluss eines Bremsmagneten vor, oder das dazugehörige Schaltelement 8, 9 ist defekt,
- ein Vergleich zwischen beiden Magneten zur Plausibilitätsprüfung durch den Prozessor dient zur Bestimmung der Höhe des absoluten Stroms.

### 4. Überwachung der Löschdioden 6, 7

Die Spannung der Löschdiode in Flussrichtung wird durch die Detektiereinheiten 17, 18 gemessen. Im Normalbetrieb ist diese Spannung im Abschaltzeitpunkt gering, Durchlassspannung der Diode, im Fehlerfall entsteht hier jedoch eine deutlich höhere Spannungsspitze durch den unterbrochenen Löschkreis. Ein Verlust der Sperrwirkung wird über die Detektiereinheiten 15, 16 und/oder 17, 18 ermittelt.

### 5. Überwachung der Schaltelemente 8, 9

Die Messung der Spannungen über die Schaltelemente 8, 9, z.B. Spannung zwischen Source und Drain beim IGBT, erfolgt über die Detektiereinheiten 19, 20. Entspricht die Spannung durch die Detektiereinheiten 19, 20 gemessene Spannung der Versorgungsspannung, welche bei der unter 1. beschriebenen Messung ermittelt wurde, so ist das entsprechende Schaltelement 8, 9 abgeschaltet, es fließt kein Strom. Eine geringe positive Spannung im Niedervoltbereich ist ein Maß für den Stromfluss durch das Element. Somit kann durch die Messung 5 auch noch der entsprechende Stromsensor überwacht werden.

Zusätzlich zu den oben genannten Überwachungen kann auch noch die Einschaltdauer überwacht werden:

Mit Beginn der Bremsung wird eine Wartezeit eingestellt, die der längsten Aktivierungszeit der Magnetbremse entspricht. Nach Ablauf der Wartezeit ist die Bremsung unter normalen Bedingungen abgeschlossen, das auslösende Signal zurückgenommen. Liegt nach Ablauf der Wartezeit dieses Signal weiterhin an, so wird ein Fehler der Eingangsschaltung vermutet.

Der Prozessor wird mit den Informationen der Messglieder versorgt und leitet daraus die Fehlerzustände ab. Diese werden über die Ausgangsleitungen dem übergeordneten System bekanntgemacht und zusätzlich in einem nichtflüchtigen Fehlerspeicher abgelegt.

Im Bahnbetrieb wird regelmäßig oder nach Bedarf eine Bremsprobe durchgeführt, deren Auswertung dazu dient, aus den Messwerten der Systemdiagnose bei einer angeforderten Bremsprobe auf das sichere Auftreffen beider Bremsmagneten auf den Schienen zu schließen. Im Rahmen dieser Bremsprobe erfolgt eine vollständige Überwachung des Systems und der Stromverlauf aufgezeichnet. Hierbei erfolgt insbesondere eine Überwachung der Nulldurchgänge, wie auch eine Aufzeichnung der Absolutwerte.

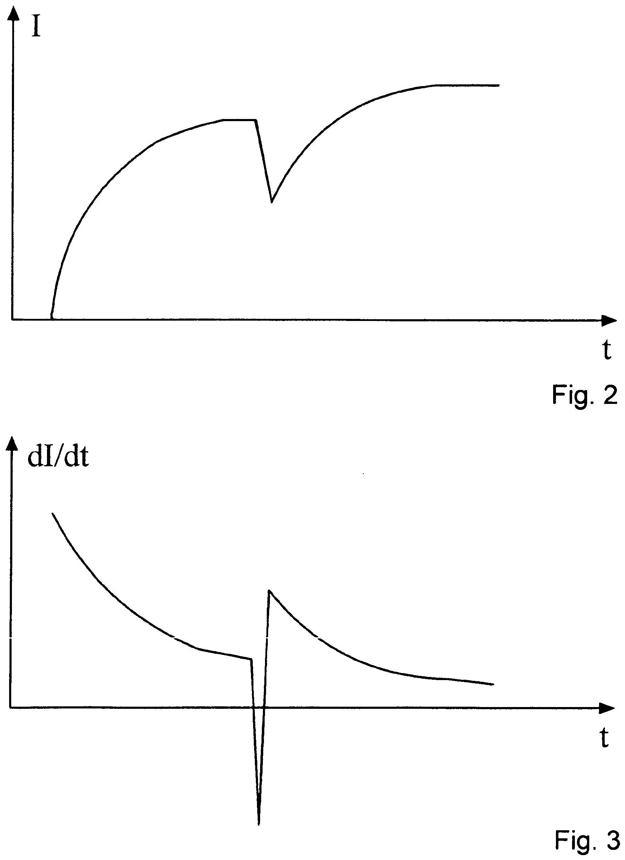

Mit Beginn der Bremsprobe werden die elektronischen Schalter geschlossen. Der Stromfluss durch die Magnete baut sich entsprechend der Zeitkonstante der Bremsmagnete auf. Parallel dazu werden die Bremsmagnete auf die Schienen abgesenkt. Zum Zeitpunkt des Kontakts der Magnete mit den Schienen fließt bereits ein gewisser Strom durch die Bremsmagnete. Durch das Eisen der Schiene wird die Gesamtinduktivität des magnetischen Kreises beider Bremsmagnete verändert. Dieser Vorgang äußert sich in einer Verminderung des Stromflusses durch den Bremsmagneten. Im Anschluss daran steigt der Strom wieder an, bis er einen konstanten Endwert erreicht. Dieser Stromverlauf mit dem charakteristischen Knick ist in Fig. 2 dargestellt.

Auf Basis dieses Stromverlaufes kann auf das sichere Auftreffen der Bremsmagneten auf die Schienen geschlossen werden. Die Überprüfung des Aufsetzens der Bremsmagnete erfolgt im Einsatz entsprechend der Auswertung der Bremsprobe.

Im Betrieb kann jedoch nicht gewährleistet werden, dass der Stromverlauf immer dem Stromverlauf der Bremsprobe entspricht. So übt die Abnutzung der Bremsmagnete wie auch Verunreinigungen auf den Schienen oder ähnliches einen mitunter erheblichen Einfluss auf die Messwerte aus, so dass ein abgeschwächter Stromverlauf gemessen wird und gleichzeitig der charakteristische Knick nicht mehr so stark hervortritt. Der Verschleiß übt hierbei auch einen Einfluss auf die Bremsprobe aus, so dass die Absolutwerte der Kurven voneinander abweichen können.

Daher wird gemäß der vorliegenden Erfindung die Funktion der Bremse nicht unmittelbar aus den Werten des Stromverlaufs ermittelt, sondern die Ableitung von aufeinanderfolgenden Messwerten gebildet. Diese ist lange positiv, zum Berührungszeitpunkt stark negativ und anschließend wieder positiv. Aus der in Fig. 3 dargestellten Ableitungskurve wird deutlich, dass das korrekte Aufsetzen der Bremse durch das Vorhandensein zweier Nulldurchgänge der Ableitungskurve sichergestellt werden kann. Diese Nulldurchgänge können auch bei einem abgeschwächten Stromverlauf eindeutig festgestellt werden, so dass eine zuverlässige Überwachung gewährleistet wird. Im Einsatz wird hierbei die Differenz (Ableitung) von aufeinanderfolgenden Messwerten abgebildet. Diese ist lange positiv, zum Berührungszeitpunkt stark negativ und anschließend wieder positiv. Ein Maß für den Kontakt und Abstand zwischen Magnet und Schiene ist der Einbruch der Stromkurve, der sich in der negativen Spitze des Differentials zeigt.

Zusätzlich kann auch der Mindest- und Maximalstrom bewertet werden. Daneben wird das erreichte Maximum der Kurve gespeichert. Bei Berührung zwischen Magnet und Schiene ist die Ableitung der Kurve negativ, der momentane Messwert kleiner als das zuvor erreichte Maximum. Im Laufe der Zeit steigt der Stromfluss wieder an und erreicht oder übertrifft das vorher bereits ermittelte Maximum.

Im Betrieb wird der Stromfluss in Zeitkonstantenabschnitten von in der Regel 10 Millisekunden gemessen.

Zusätzlich zu der Überwachung der Magnetbremse anhand des Stromverlaufes kann die Wirkung der Magnetbremse noch durch zusätzliche Vorrichtungen/ Verfahren sichergestellt werden, die in Kombination mit der zuvor beschriebenen Überwachungsvorrichtung eingesetzt werden können.

So kann die Magnetbremse zusätzliche gleichzeitig durch einen Schwingkreis überwacht werden. Mit dem Bremsmagneten als ein Element wird in diesem Fall ein Schwingkreis aufgebaut. Bedingt durch die unterschiedliche Induktivität bei gehobenen wie abgesenkten Magneten ergeben sich unterschiedliche Resonanzfrequenzen dieses Schwingkreises.

Zusätzlich kann der Bremsmagnet auch mit einem Lagesensor versehen werden. Dieser misst die Entfernung zwischen sich und dem Schienenkopf. Wird eine gewisse Entfernung unterschritten, wird dies als Aufliegen auf dem Schienenkopf interpretiert. Über Sensoren an beiden Enden des Magneten kann eine nicht waagerechte Lage erkannt werden. Als Sensoren können induktive, kapazitive oder optische Sensoren dienen.

Ferner kann im Bremsmagneten ein Thermometer integriert sein. Mit Einschalten der Bremse bewirkt der Stromfluss im Magneten dessen Eigenerwärmung. Bei Kontakt des Magneten mit der Schiene erfolgt die Verzögerung des Fahrzeugs über Reibung. Die dabei entstehende Wärme ist deutlich größer als die Eigenerwärmung durch den Strom.

Ferner kann die Temperatur des Schienenkopfes vor und hinter der Magnetbremse über je einen Thermosensor gemessen werden. Bei Bremsung erzeugt die Reibung eine Erhöhung der Schienentemperatur. Durch Vergleich der Temperatur vor und hinter dem Magneten lässt sich die Wirkung der Bremse erkennen. Vorteilhaft bei dieser Anordnung ist, dass der Sensor nicht auf dem Träger der Magneten angebaut ist, sondern im durch die Primärfederung geschützten Bereich.

Zusätzlich zu den oben genannten Überwachungsverfahren kann die Überwachung auch auf der Basis eines vergleichenden Verfahrens erfolgen. Hierbei werden zwei in kurzem Abstand aufeinanderfolgende Messungen miteinander verglichen. Mit Beginn der Bremsung wird der Magnet eingeschaltet. Es baut sich ein Stromfluss auf. Bei Erreichen eines bestimmten Stromflusses wird der Magnet abgeschaltet, so dass der Strom abnimmt. Nach einer gewissen Zeit, nachdem der Magnet üblicherweise den Schienenkopf erreicht hat, werden die Magnete wieder eingeschaltet. Es baut sich wieder ein Strom auf, dessen Zeitkonstante durch den veränderten magnetischen Kreis verändert ist. Der Vergleich kann anhand eines Vergleiches der Stromkurvenform oder der Zeit bis zum Erreichen eines gewissen Stromflusses erfolgen. Im ersteren Fall muss ein Einschalten bei abgesenkten Magneten einen geringeren Stromfluss zeigen als der Strom bei angehobenen Magneten. Im letzteren Fall werden die Zeiten bis zur Erzielung eines definierten Stromflusses verglichen. Diese Zeit ist bei einem abgesenkten Magneten etwas länger.

## Patentansprüche

1. Vorrichtung zur Überwachung einer Magnetbremse an Schienenfahrzeugen, wobei die Magnetbremse mit einer Spannungsquelle zur Bestromung verbunden ist, die Vorrichtung die Einschaltung und Überwachung des Bremsmagnetstromes umfasst und die Überwachungseinrichtung eine Ermittlungseinrichtung und eine Auswertungseinrichtung umfasst, wobei die Ermittlungseinrichtung die Funktion des Stromkreises zur Bestromung der Magnetbremse kontinuierlich überwacht und den Strom- und/oder Spannungsverlauf aufzeichnet,
**dadurch gekennzeichnet, dass** die Auswertungseinrichtung anhand des aufgezeichneten Strom- und/oder Spannungsverlaufs das Aufsetzen der Magnetbremse auf die Schiene durch Detektion zweier Nulldurchgänge der ersten Ableitung des Strom- und/oder Spannungsverlaufs ermittelt.

2. Vorrichtung nach Anspruch 1, **dadurch gekennzeichnet, dass** ein elektromechanisches Trennelement 3 als Notabschalter im Stromkreis angeordnet ist.

3. Vorrichtung nach Anspruch 1 oder 2, **dadurch gekennzeichnet, dass** die Ermittlungseinrichtung zusätzlich die einzelnen Elemente des Stromkreises, insbesondere das elektromechanische Trennelement 3, die Stromsensoren 4, 5, Löschdioden 6, 7 und Schaltelemente 8, 9, überwacht.

4. Vorrichtung nach Anspruch 3, **dadurch gekennzeichnet, dass** die Schaltelemente IGBT Module sind.

5. Vorrichtung nach einem der Ansprüche 1 bis 3, **dadurch gekennzeichnet, dass** jeder Bremsmagnet einen Lagesensor aufweist.

6. Vorrichtung nach Anspruch 5, **dadurch gekennzeichnet, dass** der Lagesensor ein induktiver, kapazitiver oder optischer Sensor ist.

7. Vorrichtung nach einem der Ansprüche 1 bis 3, **dadurch gekennzeichnet, dass** jeder Bremsmagnet ein Thermometer aufweist.

8. Vorrichtung nach einem der Ansprüche 1 bis 3, **dadurch gekennzeichnet, dass** vor und hinter jedem Bremsmagneten einen Thermosensor angeordnet ist.

9. Vorrichtung nach wenigstens einem der Ansprüche 1 bis 6, **dadurch gekennzeichnet, dass** jeder Bremsmagnet in einem eigenen Stromkreis angeordnet ist.

10. Vorrichtung nach einem der Ansprüche 1 bis 9, **dadurch gekennzeichnet, dass** die Vorrichtung ein Drehgestell mit zwei Magneten oder einen Wagen mit zwei Drehgestellen überwacht.

11. Verfahren zur Überwachung einer Magnetbremse an Schienenfahrzeugen, umfassend die kontinuierliche Überwachung der Funktion des Stromkreises zur Bestromung der Magnetbremse und Aufzeichnung des Strom- und/oder Spannungsverlaufs,
**dadurch gekennzeichnet, dass**
anhand des aufgezeichneten Strom- und/oder Spannungsverlaufs das Aufsetzen der Magnetbremse auf die Schiene durch die Detektion zweier Nulldurchgänge der ersten Ableitung des Strom- und/oder Spannungsverlaufs ermittelt wird.

12. Verfahren nach Anspruch 11, **dadurch gekennzeichnet, dass** der Stromfluss in Zeitkonstantenabschnitten von 1 bis 30 Millisekunden gemessen wird.

13. Verfahren nach Anspruch 11 oder 12, **dadurch gekennzeichnet, dass** der Strompfad jedes Bremsmagneten getrennt überwacht wird.

14. Verfahren nach einem der Ansprüche 11 bis 13, **dadurch gekennzeichnet, dass** der Strom in der Hinleitung und Rückleitung gemessen wird.

15. Verfahren nach einem der Ansprüche 11 bis 14, **dadurch gekennzeichnet, dass** die Versorgungsspannung und/oder die systeminternen Spannungen im Magnetkreis zyklisch gemessen werden.

16. Verfahren nach einem der Ansprüche 11 bis 15, **dadurch gekennzeichnet, dass** eine Meldung des Zustandes und/oder der allgemeinen Fehlersituation an ein übergeordnetes System weitergegeben wird.

17. Verfahren nach einem der Ansprüche 11 bis 16, **dadurch gekennzeichnet, dass** zusätzlich die einzelnen Elemente des Stromkreises überwacht werden und eine Diagnose jedes einzelnen Elementes erfolgt.

## Claims

1. Device for monitoring a magnetic brake on rail vehicles, the magnetic brake being connected to a voltage source to be energized, the device comprising switching on and monitoring the brake magnet current, and the monitoring device comprising a determining device and an evaluating device, the determining device continuously monitoring the function of the circuit for energizing the magnetic brake and recording the current and/or voltage profile,
**characterized in that** by using the recorded current and/or voltage profile, the evaluating device determines the placement of the magnetic brake on the rail by detecting two zero crossings of the first derivative of the current and/or voltage profile.

2. Device according to Claim 1, **characterized in that** an electromagnetic disconnection element 3 is arranged in the circuit as an emergency cut-out.

3. Device according to Claim 1 or 2, **characterized in that** the determining device additionally monitors the individual elements of the circuit, in particular the electromagnetic disconnection element 3, the current sensors 4, 5, suppressor diodes 6, 7 and switching elements 8, 9.

4. Device according to Claim 3, **characterized in that** the switching elements are IGBT modules.

5. Device according to one of Claims 1 to 3,
**characterized in that** each brake magnet has a position sensor.

6. Device according to Claim 5, **characterized in that** the position sensor is an inductive, capacitive or optical sensor.

7. Device according to one of Claims 1 to 3,
**characterized in that** each brake magnet has a thermometer.

8. Device according to one of Claims 1 to 3,
**characterized in that** a thermal sensor is arranged upstream and downstream of each brake magnet.

9. Device according to at least one of Claims 1 to 6,
**characterized in that** each brake magnet is arranged in an individual circuit.

10. Device according to one of Claims 1 to 9,
**characterized in that** the device monitors a bogie having two magnets or a wagon having two bogies.

11. Method for monitoring a magnetic brake on rail vehicles, comprising the continuous monitoring of the function of the circuit for energizing the magnetic brake and recording the current and/or voltage profile,
**characterized in that**
by using the recorded current and/or voltage profile, the placement of the magnetic brake on the rail is determined by detecting two zero crossings of the first derivative of the current and/or voltage profile.

12. Method according to Claim 11, **characterized in that** the current flow is measured in time constant sections of 1 to 30 milliseconds.

13. Method according to Claim 11 or 12, **characterized in that** the current path of each brake magnet is monitored separately.

14. Method according to one of Claims 11 to 13,
**characterized in that** the current in the feed line and return line is measured.

15. Method according to one of Claims 11 to 14,
**characterized in that** the supply voltage and/or the internal system voltages in the magnetic circuit is/are measured cyclically.

16. Method according to one of Claims 11 to 15,
**characterized in that** a message relating to the state and/or the general fault situation is forwarded to a higher-level system.

17. Method according to one of Claims 11 to 16,
**characterized in that** in addition the individual elements of the circuit are monitored and a diagnosis of each individual element is carried out.

## Revendications

1. Dispositif pour assurer la surveillance d'un frein magnétique dans des véhicules sur rails,
le frein magnétique étant relié à une source de tension pour l'alimentation en courant, le dispositif comprenant la mise en marche et la surveillance du courant de frein magnétique, et le dispositif de surveillance comprenant un dispositif de détermination et un dispositif de traitement de données, et
le dispositif de détermination surveillant de manière continue la fonction du circuit de courant pour l'alimentation en courant du frein magnétique, et enregistrant la loi de variation du courant et/ou de la tension,
**caractérisé en ce que** le dispositif de traitement de données détermine, à partir de la loi de variation enregistrée du courant et/ou de la tension, l'application du frein magnétique sur le rail, par détection de deux passages par zéro de la dérivée première de la loi de variation du courant et/ou de la tension.

2. Dispositif selon la revendication 1, **caractérisé en ce qu'**un élément de sectionnement électromécanique (3) est prévu en tant que qu'interrupteur d'arrêt d'urgence dans le circuit de courant.

3. Dispositif selon la revendication 1 ou la revendication 2, **caractérisé en ce que** le dispositif de détermination surveille en supplément les éléments individuels du circuit de courant, notamment l'élément de sectionnement électromécanique (3), les capteurs de courant (4, 5), des diodes de protection (6, 7) et des éléments de commutation (8, 9).

4. Dispositif selon la revendication 3, **caractérisé en ce que** les éléments de commutation sont des modules IGBT (transistor bipolaire à grille isolée).

5. Dispositif selon l'une des revendications 1 à 3,
**caractérisé en ce que** chaque aimant de freinage comporte un capteur de position.

6. Dispositif selon la revendication 5, **caractérisé en ce que** le capteur de position est un capteur inductif, capacitif ou optique.

7. Dispositif selon l'une des revendications 1 à 3,
**caractérisé en ce que** chaque aimant de freinage comporte un thermomètre.

8. Dispositif selon l'une des revendications 1 à 3,
**caractérisé en ce que** devant et derrière chaque aimant de freinage est agencé un capteur de température.

9. Dispositif selon l'une au moins des revendications 1 à 6, **caractérisé en ce que** chaque aimant de freinage est agencé dans un circuit de courant qui lui est propre.

10. Dispositif selon l'une des revendications 1 à 9, **caractérisé en ce que** le dispositif surveille un bogie avec deux aimants ou un véhicule avec deux bogies.

11. Procédé destiné à assurer la surveillance d'un frein magnétique dans des véhicules sur rails, comprenant la surveillance continue du fonctionnement du circuit de courant destiné à alimenter en courant le frein magnétique et l'enregistrement de la loi de variation du courant et/ou de la tension,
**caractérisé en ce que** l'on détermine, à partir de la loi de variation enregistrée du courant et/ou de la tension, l'application du frein magnétique sur le rail, par détection de deux passages par zéro de la dérivée première de la loi de variation du courant et/ou de la tension.

12. Procédé selon la revendication 11, **caractérisé en ce que** le flux de courant est mesuré selon des intervalles de temps constants de 1 à 30 millisecondes.

13. Procédé selon la revendication 11 ou la revendication 12, **caractérisé en ce que** le chemin de courant de chaque aimant de freinage est surveillé de manière séparée.

14. Procédé selon l'une des revendications 11 à 13,
**caractérisé en ce que** le courant est mesuré dans la ligne aller et dans la ligne retour.

15. Procédé selon l'une des revendications 11 à 14,
**caractérisé en ce que** la tension d'alimentation et/ou les tensions internes du système dans le circuit magnétique sont mesurées de manière cyclique.

16. Procédé selon l'une des revendications 11 à 15,
**caractérisé en ce qu'**un message concernant l'état et/ou la situation générale de défaut, est transmis à un système hiérarchiquement supérieur.

17. Procédé selon l'une des revendications 11 à 16,
**caractérisé en ce que** l'on surveille en supplément les éléments individuels du circuit de courant, et on effectue un diagnostic de chaque élément individuel.
